# EUROPEAN PATENT APPLICATION

(11) **EP 4 369 475 A1**
(43) Date of publication of application: **15.05.2024**
(21) Application number: 22930317.7
(22) Date of filing: 11.03.2022
(51) Int. Cl.: H01M 10/615, H01M 10/625, H01M 10/635, H01M 10/44

(54) **BATTERY HEATING METHOD, CHARGING APPARATUS AND BATTERY MANAGEMENT SYSTEM**

(71) Applicant: Contemporary Amperex Technology Co., Limited, Ningde, Fujian 352100 (CN)
(72) Inventor: LI, Zhanliang, Ningde, Fujian 352100 (CN); YAN, Yu, Ningde, Fujian 352100 (CN); DAN, Zhimin, Ningde, Fujian 352100 (CN); CHEN, Xinwei, Ningde, Fujian 352100 (CN); ZHAO, Yuanmiao, Ningde, Fujian 352100 (CN); HUANG, Xiaojian, Ningde, Fujian 352100 (CN); GAO, Jinfeng, Ningde, Fujian 352100 (CN)
(74) Representative: Rowlands, Stuart Michael
(86) International application number: PCT/CN2022/080263
(87) International publication number: WO 2023/168678

(57) **Abstract**

Embodiments of the present application provide a battery heating method, a charging device, and a battery management system, which can effectively heat a power battery. The method is performed by a charging device, the method including: receiving first instruction information from a control device of a power battery before the charging device charges the power battery, where the first instruction information is used to instruct the charging device to heat the power battery; and heating the power battery according to the first instruction information.

## Description

### Technical Field

The present application relates to the technical field of batteries, and in particular, to a battery heating method, a charging device, and a battery management system.

### Background

Due to the advantages of high energy density, recyclable charging, safety and environmental protection, power batteries are widely used in the field of new energy vehicles, consumer electronics, energy storage systems and the like.

However, the use of power batteries in a low-temperature environment is limited. For example, the discharge capacity of the power batteries in a low-temperature environment will seriously decline, and the battery cannot be charged in a low-temperature environment. In order to enable the normal use of the power battery, it is necessary to heat the power battery in a low temperature environment. How to effectively heat the power battery becomes an urgent problem to be solved.

### Summary of the Invention

The present application provides a battery heating method, a charging device, and a battery management system, which can effectively heat a power battery.

In a first aspect, a battery heating method is provided, which is performed by a charging device. The method includes: receiving first instruction information from a control device of a power battery before the charging device charges the power battery, the first instruction information being used to instruct the charging device to heat the power battery; heating the power battery according to the first instruction information.

Charging the power battery at low temperature may cause problems such as lithium plating, thereby affecting the safety of the power battery. In the embodiment of the present application, before charging the power battery, if the temperature of the power battery is low, the control device of the power battery sends a first instruction information to the charging device, instructing same to heat the power battery, and the charging device receives the first instruction information and heats the power battery based on the first instruction information, so as to avoid damage to the power battery caused by low-temperature charging.

In an implementation, the first instruction information includes information about the amplitude and/or frequency of a pulse current used to heat the power battery.

The frequency of the pulse current used for heating different power batteries can be different, and the control device of the power battery may determine information about the amplitude and/or frequency of the pulse current used to heat the power battery, and carry the information about the pulse current in the first instruction information, so that the charging device may heat the power battery based on an appropriate pulse current, there by improving heating performance.

In an implementation, the charging device includes a bidirectional DC/DC converter. Heating the power battery according to the first instruction information includes: controlling the bidirectional DC/DC converter to form a circuit for discharging from the power battery to the charging device and a circuit for charging the power battery by the charging device, so as to heat the power battery during the discharging and charging processes.

The bidirectional DC/DC converter includes a plurality of switching transistors. In this embodiment, by controlling each switching transistor in the bidirectional DC/DC converter, so that the power battery and the charging device can be alternately charged and discharged so as to heat the power battery during the discharging and charging processes.

In an implementation, the charging device further includes an AC/DC converter, and the AC/DC converter and the bidirectional DC/DC converter are connected between an alternating current power supply and the power battery.

In an implementation, the charging device further includes an energy storage battery, and the bidirectional DC/DC converter is connected between the energy storage battery and the power battery.

In an implementation, the method further includes: receiving second instruction information from the control device, the second instruction information being used to instruct the charging device to stop heating the power battery; and stopping heating the power battery according to the second instruction information.

In an implementation, the method further includes: receiving third instruction information from the control device, wherein the third instruction information is used to instruct the charging device to charge the power battery, and the third instruction information includes information about a charging voltage and/or a charging current; and charging the power battery according to the third instruction information.

In this embodiment, after heating the power battery to a predetermined temperature, the control device of the power battery sends third instruction information to the charging device, instructing same to charge the power battery, then the charging device receives the third instruction information and charges the power battery based on the third instruction information. Since the temperature of the power battery is raised at this time, damage to the power battery caused by low-temperature charging is avoided, and the safety of the power battery is ensured.

In an implementation, the method further includes: receiving fourth instruction information from the control device, the fourth instruction information being used to instruct the charging device to stop charging the power battery; and stopping charging the power battery according to the fourth instruction information.

In a second aspect, a battery heating method is provided, which is performed by a battery management system BMS of a power battery, the method includes: obtaining the temperature of a power battery before the power battery is charged by a charging device; and sending first instruction information to the charging device if the temperature of the power battery is less than a temperature threshold, the first instruction information being used to instruct the charging device to heat the power battery.

Charging the power battery at low temperature may cause problems such as lithium plating, thereby affecting the safety of the power battery. In the embodiment of the present application, before charging the power battery, if the temperature of the power battery is low, the BMS sends first instruction information to the charging device, instructing same to heat the power battery, then the charging device receives the first instruction information and heats the power battery based on the first instruction information, so as to avoid damage to the power battery caused by low-temperature charging.

In an implementation, the first instruction information includes information about the amplitude and/or frequency of a pulse current used to heat the power battery.

The frequency of the pulse current used for heating different power batteries can be different, and the BMS may determine information about the amplitude and/or frequency of the pulse current used to heat the power batteries, and carry the information about the pulse current in the first instruction information, so that the charging device heats the power batteries based on an appropriate pulse current, thereby improving heating performance.

In an implementation, before the sending first instruction information to the charging device, the method further includes: determining, based on a preset corresponding relationship between a plurality of temperatures and a plurality of amplitudes, that the maximum amplitude of the pulse current is the amplitude corresponding to the temperature of the power battery; and/or, determining, based on a preset corresponding relationship between a plurality of temperatures and a plurality of frequencies, that the frequency of the pulse current is the frequency corresponding to the temperature of the power battery.

Based on the current temperature of the power battery, the BMS can determine information such as a maximum amplitude and/or the frequency of the pulse current corresponding to the current temperature by means of table lookup, which is simple and accurate.

In an implementation, the method further includes: sending second instruction information to the charging device when the temperature of the power battery is greater than or equal to the temperature threshold, the second instruction information being used to instruct the charging device to stop heating the power battery.

During the heating process, information such as the frequency and/or maximum amplitude of the pulse current may be correspondingly adjusted based on rise in the temperature of the power battery, and the BMS may send the first instruction information to the charging device a plurality of times to update the information of the pulse current. A temperature threshold is set, and when the power battery is heated to exceed the temperature threshold, the BMS sends second instruction information to the charging device, instructing same to stop heating, then the charging device receives the second instruction information and stops heating the power battery based on the second instruction information.

In an implementation, the method further includes: sending third instruction information to the charging device, wherein the third instruction information is used to instruct the charging device to charge the power battery, and the third instruction information includes information about a charging voltage and/or a charging current.

In this embodiment, after heating the power battery to a predetermined temperature, the BMS sends third instruction information to the charging device, instructing same to charge the power battery, wherein the third instruction information may include, for example, information about a charging voltage and/or a charging current, then the charging device receives the third instruction information and charges the power battery based on the third instruction information. Since the temperature of the power battery is raised at this time, the safety of the power battery is ensured, and damage to the power battery is avoided.

In an implementation, the method further includes: sending fourth instruction information to the charging device, the fourth instruction information being used to instruct the charging device to stop charging the power battery.

In a third aspect, a charging device is provided, including: a receiving module, configured to receive, before the charging device charges a power battery, first instruction information sent by a battery management system BMS of the power battery, the first instruction information being used to instruct the charging device to heat the power battery; and a processing module, configured to heat the power battery according to the first instruction information.

In an implementation, the first instruction information includes information about the amplitude and/or frequency of a pulse current used to heat the power battery.

In an implementation, the charging device further includes a bidirectional DC/DC converter, and the processing module is specifically configured to: control the bidirectional DC/DC converter to form a circuit for discharging from the power battery to the charging device and a circuit for charging the power battery by the charging device, so as to heat the power battery during the discharging and charging processes.

In an implementation, the charging device further includes an AC/DC converter, and the AC/DC converter and the bidirectional DC/DC converter are connected between an alternating current power supply and the power battery.

In an implementation, the charging device further includes an energy storage battery, and the bidirectional DC/DC converter is connected between the energy storage battery and the power battery.

In an implementation, the receiving module is further configured to: receive second instruction information sent by the BMS, the second instruction information being used to instruct the charging device to stop heating the power battery; and the processing module is further configured to: stop heating the power battery according to the second instruction information.

In an implementation, the receiving module is further configured to: receive third instruction information sent by the BMS, wherein the third instruction information is used to instruct the charging device to charge the power battery, and the third instruction information includes information about a charging voltage and/or a charging current; and the processing module is further configured to: charge the power battery according to the third instruction information.

In an implementation, the receiving module is further configured to: receive fourth instruction information sent by the BMS, the fourth instruction information being used to instruct the charging device to stop charging the power battery; and the processing module is further configured to: stop charging the power battery according to the fourth instruction information.

In a fourth aspect, a BMS is provided, including: a processing module, configured to obtain the temperature of a power battery before the power battery is charged by a charging device; and a sending module, configured to send first instruction information to the charging device when the temperature of the power battery is less than a temperature threshold, the first instruction information being used to instruct the charging device to heat the power battery.

In an implementation, the first instruction information includes information about the amplitude and/or frequency of a pulse current used to heat the power battery.

In an implementation, before the sending the first instruction information to the charging device, the processing module is further configured to: determine, based on a preset corresponding relationship between a plurality of temperatures and a plurality of amplitudes, that the maximum amplitude of the pulse current is the amplitude corresponding to the temperature of the power battery; and/or, determine, based on a preset corresponding relationship between a plurality of temperatures and a plurality of frequencies, that the frequency of the pulse current is the frequency corresponding to the temperature of the power battery.

In an implementation, the sending module is further configured to: send second instruction information to the charging device when the temperature of the power battery is greater than or equal to the temperature threshold, the second instruction information being used to instruct the charging device to stop heating the power battery.

In an implementation, the sending module is further configured to: send third instruction information to the charging device, wherein the third instruction information is used to instruct the charging device to charge the power battery, and the third instruction information includes information about a charging voltage and/or a charging current.

In an implementation, the sending module is further configured to: send fourth instruction information to the charging device, the fourth instruction information being used to instruct the charging device to stop charging the power battery.

In a fifth aspect, a battery heating device is provided, including a memory and a processor. The memory is configured to store instructions, and the processor is configured to read the instructions, and execute the battery heating method according to the first aspect or any one of implementations of the first aspect based on the instructions.

In a sixth aspect, a computer storage medium is provided, including instructions, the instructions are used to enable a computer to execute the battery heating method according to the first aspect or any one of implementations of the first aspect, or the battery heating method according to the second aspect or any one of implementations of the second aspect.

### Description of Drawings

In order to illustrate the technical solutions of the examples of the present application more clearly, the following briefly introduces the drawings required in the examples of the present application. It will be apparent that the drawings described below are only some examples of the present application. For those of ordinary skill in the art, other drawings can also be obtained according to the drawings without any creative effort.
Fig. 1 is a schematic diagram of an application scenario of a battery heating device according to an embodiment of the present application;
Fig. 2 is a schematic diagram of an application scenario of a battery heating device according to an embodiment of the present application;
Fig. 3 is an interactive flowchart of a battery heating method according to an embodiment of the present application;
Fig. 4 is an interactive flowchart of a battery heating method according to another embodiment of the present application;
Fig. 5 is a schematic block diagram of a charging device according to an embodiment of the present application;
Fig. 6 is a schematic block diagram of a BMS according to an embodiment of the present application;
Fig. 7 is a schematic block diagram of a charging device according to an embodiment of the present application;
Fig. 8 is a schematic block diagram of a BMS according to an embodiment of the present application;
Fig. 9 is a schematic block diagram of a battery heating device according to an embodiment of the present application; and
Fig. 10 is a schematic block diagram of a computer storage medium according to an embodiment of the present application.

In the drawings, the drawings are not drawn to actual scale.

### Detailed Description

The embodiments of the present application are further described in detail in combination with the drawings and the embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second", "third", and the like are used for description purposes only and cannot be understood as indicating or implying relative importance. "Perpendicular" is not perpendicular in the strict sense, but within the allowable range of error. "Parallel" is not parallel in the strict sense, but within the allowable range of error.

The orientation words appearing in the following description are all the directions shown in the figures, and are not intended to limit the specific structure of the present application. In the description of the present application, it should be further noted that unless otherwise prescribed and defined clearly, terms "mounting", "connecting with" and "connecting" should be understood in a broad sense, which for example can be a fixed connection and can also be a detachable connection or an integral connection; or can be a direct connection and can also be a connection through an intermediary. For those of ordinary skill in the art, the specific meanings of the above terms in the present application may be understood according to specific circumstances.

With the development of the times, new energy vehicles have huge market prospects and can effectively promote energy saving and emission reduction due to their advantages such as environmental protection, low noise, and low cost of use, which is conducive to social development and progress.

Due to electrochemical properties of a power battery, in a low temperature environment, charging and discharging capacities of the power battery are greatly limited, which seriously affects the experience of a customer in using a vehicle in winter. Therefore, in order to enable the normal use of the power battery, it is necessary to heat the power battery in the low temperature environment.

The power battery in the embodiments of the present application may be a lithium-ion battery, a lithium-metal battery, a lead-acid battery, a nickel-cadmium battery, a nickel-metal hydride battery, a lithium-sulfur battery, a lithium-air battery, a sodium-ion battery, or the like, which is not limited here. In terms of scale, the power battery in the example of the present application may be a cell, or a battery module or a battery pack, which is not limited herein. In terms of an application scenario, the power battery may be applied in a power devices such as an automobile and a ship. For example, it may be applied to a power vehicle to supply power to a motor of the power vehicle as a power source for an electric vehicle. The power battery may also supply power to other electrical apparatus in the electric vehicle, such as an in-vehicle air conditioner and an in-vehicle player.

For ease of description, the solution of the present application will be described below by taking the power battery applied to a new energy vehicle (that is, a power vehicle, or referred to as an electric vehicle) as an example.

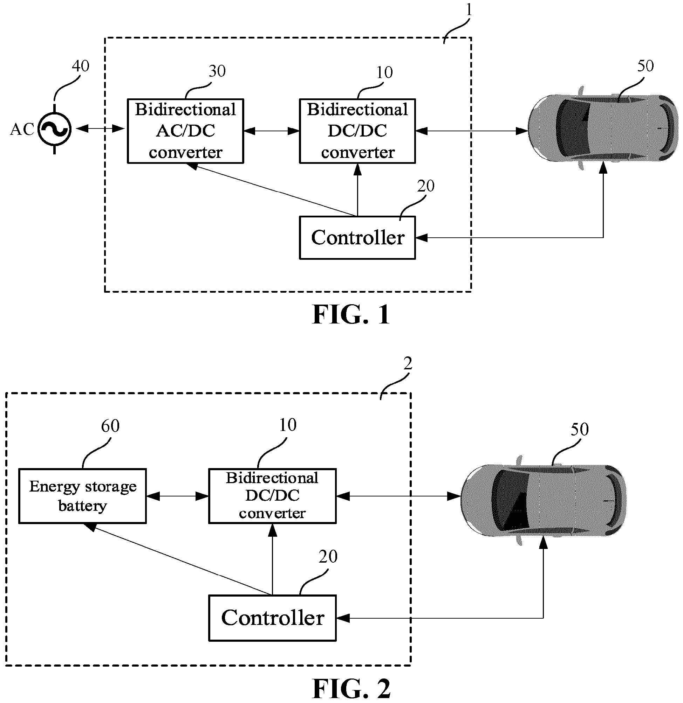

Generally, an alternating current power supply or an energy storage battery may be used to charge a power battery. As an example, Fig. 1 and Fig. 2 are schematic diagrams of possible application scenarios of embodiments of the present application. For example, as shown in Fig. 1, the charging device 1 may be, for example, a charging pile, and the charging device 1 includes a bidirectional AC/DC converter 30, a bidirectional DC/DC converter 10, and a controller 20. The charging device 1 may charge the vehicle 50 through an alternating current power supply 40, such as a power grid. wherein a bidirectional AC/DC converter 30 and a bidirectional DC/DC converter 10 are connected between the alternating current power supply 40 and the vehicle 50. The bidirectional AC/DC converter 30 may convert the alternating current output by the alternating current power supply 40 into a direct current signal, and then the bidirectional DC/DC converter 10 perform voltage conversion on the direct current signal, so as to charge the power battery of the vehicle 50. The controller 20 is configured to control the bidirectional AC/DC converter 30 and the bidirectional DC/DC converter 10, and can communicate with a battery management system (BMS) in the vehicle 50.

For another example, as shown in Fig. 2, the charging device 2 includes an energy storage battery 60 and a bidirectional DC/DC converter 10. The charging device 2 may charge the vehicle 50 through the energy storage battery 60. wherein a bidirectional DC/DC converter 10 is connected between the energy storage battery 60 and the vehicle 50, which is configured to perform voltage conversion on the direct current signal output by the energy storage battery 60. The charging device 2 may be, for example, a charging station, such as optical storage and charging inspection intelligent micro-grid charging station, wherein the energy storage battery 60 may be powered by a power grid, a photovoltaic panel, or the like by using a power conversion system (PCS).

It should be understood that, in some cases, for example, the charging device is only used to charge the power battery, the bidirectional AC/DC converter 30 may also be replaced with a unidirectional AC/DC converter, and the bidirectional DC/DC converter 10 may also be replaced with a unidirectional DC/DC converter.

In addition to outputting direct current to charge the power battery, the charging device may also serve as a battery heating device, heating the power battery by outputting a pulse current. If the power battery is in a low-temperature state, charging the power battery at a low temperature may cause problems such as lithium plating of the cell, and further cause safety problems.

To this end, an embodiment of the present application proposes that, before charging the power battery, a charging device may be used to heat the power battery at a low temperature. For example, by controlling each switching transistor in the bidirectional AC/DC converter or the bidirectional DC/DC converter, so that the power battery and the charging device may be alternately charged and discharged so as to heat the power battery during the charging and discharging processes. Then, the heated power battery is charged by the charging device.

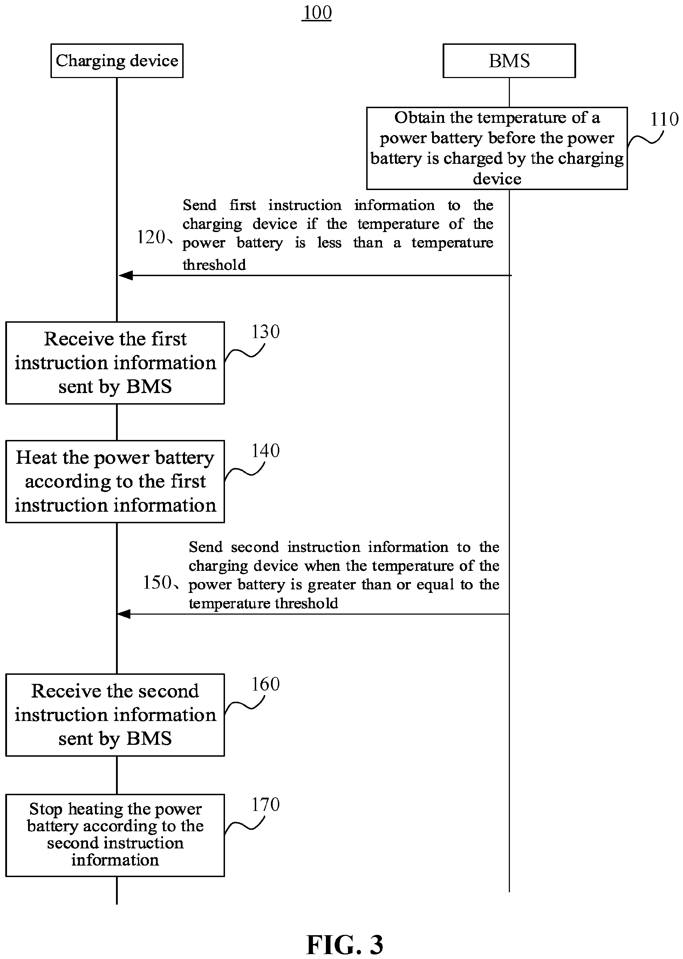

Fig. 3 is a schematic flowchart of a battery heating method according to an embodiment of the present application. The method 100 shown in Fig. 3 is performed by a control device and a charging device of a power battery. For example, the charging device may be the charging device 1 shown in Fig. 1 or the charging device 2 shown in Fig. 2. The control device of the power battery is configured to manage and control the power battery, for example, which may be a BMS of the power battery or a vehicle controller. In the following, description will be made by taking the control device as a BMS for example, and following operations performed by a BMS may be replaced by a vehicle controller or the like.

As shown in Fig. 3, the method 100 includes some or all of the following steps. Step 110 and step 120 are performed by a BMS, and step 130 and step 140 are performed by a charging device.

In step 110, before the charging device charges the power battery, the BMS obtains the temperature of the power battery.

In step 120, if the temperature of the power battery is less than a temperature threshold, the BMS sends first instruction information to the charging device.

Wherein the first instruction information is used to instruct the charging device to heat the power battery.

In step 130, before charging the power battery, the charging device receives the first instruction information sent by the BMS of the power battery.

In step 140, the charging device heats the power battery according to the first instruction information.

Since charging of the power battery at low temperature may cause problems such as lithium plating and the like, thereby affecting the safety of the power battery. Therefore, in this embodiment, before charging the power battery, if the temperature of the power battery is low, the BMS sends the first instruction information to the charging device, instructing same to heat the power battery, then the charging device receives the first instruction information and heats the power battery based on the first instruction information, thereby avoiding damage to the power battery caused by low-temperature charging.

In an implementation, as shown in Fig. 3, the method 100 further includes some or all of steps 150 to 170.

In step 150, when the temperature of the power battery is greater than or equal to a temperature threshold, the BMS sends second instruction information to the charging device, the second instruction information being used to instruct the charging device to stop heating the power battery.

In step 160, the charging device receives the second instruction information sent by the BMS.

Wherein the second instruction information is used to instruct the charging device to stop heating the power battery.

In step 170, the charging device stops heating the power battery according to the second instruction information.

The heating of the power battery by the charging device is based on discharging and charging of the power battery, and a pulse current used for heating the power battery is formed during the alternation of the discharging process and the charging process. For example, the waveform of the pulse current may be a sine wave or a similar waveform.

In an implementation, the first instruction information includes information about a pulse current used to heat the power battery. For example, the first instruction information includes information about the amplitude and/or frequency of the pulse current. Here, the information about the amplitude of the pulse current may include a maximum amplitude or an average amplitude of the pulse current.

The frequency of the pulse current used for heating different power batteries may be different. Generally, heating effect of the high frequency pulse signal is worse than heating effect of the low frequency pulse signal, but high frequency pulse signal brings less damage to the cell. For example, when the temperature of the power battery is low, only high frequency pulse current can be used to heat the power battery; when the temperature of the power battery is higher, a low frequency or a high frequency pulse current can be used to heat the power battery. For another example, for power batteries on different vehicle models, the bearing capability of the cells are different, and frequencies of the pulse currents required during heating are also different. Therefore, pulse currents with different frequencies may be required for different power batteries.

The BMS may determine information about the amplitude and/or frequency of a pulse current used to heat a power battery based on information such as type and current temperature of a power battery, and carry this information about the pulse current in the first instruction information, so that the charging device can heat the power battery based on an appropriate pulse current so as to improve heating performance. In addition, optionally, when the BMS determines information about the amplitude and/or frequency of a pulse current, factors such as state of health (SOH) of a battery may also be considered at the same time.

During the heating process, information about the pulse current used to heat the power battery may be adjusted correspondingly based on raise of temperature of a power battery. For example, the BMS may obtain the temperature of the power battery at a certain time interval, update the information about the pulse current based on the temperature variation of the power battery, and send the first instruction information carrying the updated pulse current information to the charging device when the pulse current information needs to be updated.

A temperature threshold may be set. After the power battery establishes a physical connection with the charging device and the handshake succeeds, if the temperature of the power battery is less than the temperature threshold, the BMS sends first instruction information to the charging device, then the charging device receives the first instruction information and heats the power battery based on the first instruction information. During the heating process, the BMS may obtain the temperature of the power battery at a certain time interval until the temperature of the power battery rises to be greater than or equal to the temperature threshold, then, the BMS sends second instruction information to the charging device, and the charging device receives the second instruction information and stops heating the power battery based on the second instruction information.

In an implementation, before the BMS sending the first instruction information to the charging device, the method 100 further includes: determining, by the BMS, based on a preset corresponding relationship between a plurality of temperatures and a plurality of amplitudes, that the maximum amplitude of the pulse current is the amplitude corresponding to the temperature of the power battery; and/or, determining, based on a preset corresponding relationship between a plurality of temperatures and a plurality of frequencies, that the frequency of the pulse current is the frequency corresponding to the temperature of the power battery.

Based on the current temperature of the power battery, the BMS can determine information such as a maximum amplitude and/or the frequency of the pulse current corresponding to the current temperature by means of table lookup, which is simple and accurate.

For example, takes effect of temperature of power battery on frequency of pulse current as an example, it is assumed that the corresponding relationship between the temperature of the power battery and the frequency of the pulse current is shown in Table 1. In an actual application, with regard to different types of power batteries, the lookup table may be different. It is assumed that the temperature threshold is T0, T1 < T2 < T3 < ... < Tn≤T0.

**Table 1**

| Temperature | [T1, T2] | [T2, T3] | [T3, T4] | ... | [Tn-1, Tn] |
|---|---|---|---|---|---|
| Frequency | F1 | F2 | F3 | ... | Fn |

As shown in Table 1, after the power battery establishes a physical connection with the charging device and the handshake succeeds, the BMS first detects the temperature of the power battery so as to avoid charging the power battery at a low temperature. For example, the BMS may obtain the temperature of the power battery at a fixed time interval. If the detected temperature of the power battery is between T1 and T2, the BMS queries Table 1, selects frequency F1 as the frequency of the pulse current for heating the power battery, and carries information about frequency F1 in the first instruction information, after receiving the first instruction information, the charging device provides a pulse current with frequency F 1 to the power battery; after passing the time interval, the temperature of the power battery is obtained, if the detected temperature of the power battery rises to value between T2 and T3, the BMS queries Table 1, selects frequency F2 as the frequency of the pulse current for heating the power battery, and carries information about frequency F2 in the first instruction information, after receiving the first instruction information, the charging device provides a pulse current with frequency F2 to the power battery; in this way, until the temperature of the power battery rise to be greater than Tn, the BMS sends second instruction information to the charging device, after receiving the second instruction information, the charging device stops heating the power battery according to the second instruction information.

It should be understood that, in the embodiment of the present application, optionally, the BMS sends first instruction information to the charging device, the first instruction information may be used to instruct the charging device to charge the power battery, and the first instruction information carries information about the temperature of the power battery. After receiving the first instruction information sent by the BMS, the charging device determines whether the power battery needs to be heated according to the temperature of the power battery. For example, if the charging device determines that the temperature of the power battery is less than the temperature threshold, the charging device heats the power battery first before charging the power battery.

Further, optionally, it is also possible that the BMS send the temperature of the power battery to the charging device, and the charging device determines, based on the current temperature of the power battery, information such as a maximum amplitude and/or the frequency of the pulse current corresponding to the current temperature by using the foregoing manner of table lookup and the like.

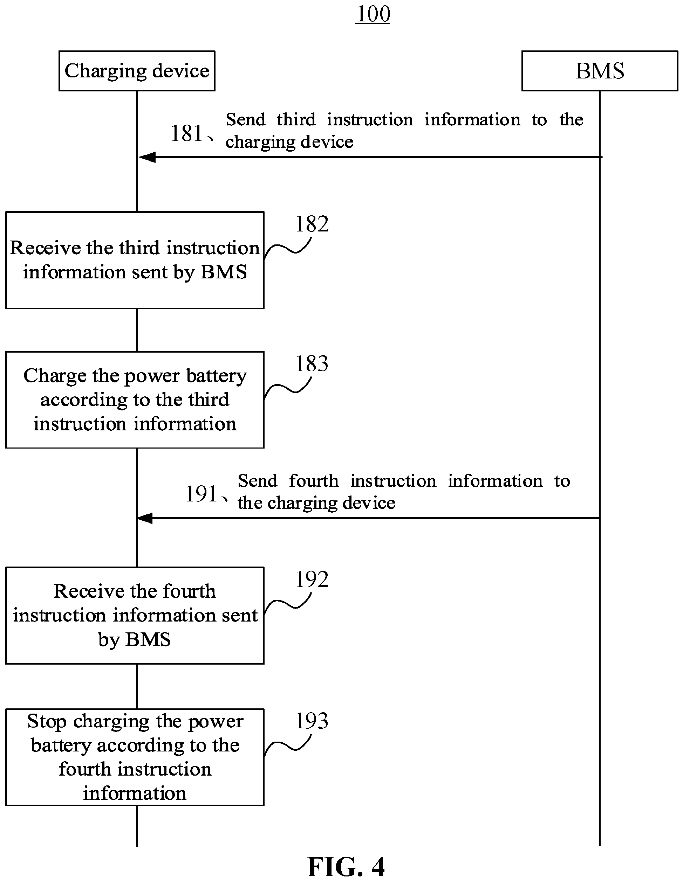

In an implementation, as shown in Fig. 4, the method 100 may further include step 181 to step 183.

In step 181, the BMS sends third instruction information to the charging device.
wherein the third instruction information is used to instruct the charging device to charge the power battery.

For example, the third instruction information may include charging parameters such as information about a charging voltage and/or a charging current.

In step 182, the charging device receives the third instruction information sent by the BMS.

In step 183, the charging device charges the power battery according to the third instruction information.

After heating the power battery to a predetermined temperature, the BMS sends third instruction information to the charging device, instructing same to charge the power battery, then the charging device receives the third instruction information and charges the power battery based on the third instruction information. Since the temperature of the power battery is raised at this time, damage to the power battery caused by low-temperature charging is avoided, and the safety of the power battery is ensured.

Certainly, after the power battery establishes a physical connection with the charging device and the handshake succeeds, if the temperature of the power battery is greater than the temperature threshold, the BMS may not send the first instruction information to the charging device, but send the third instruction information to the charging device instead. After receiving the third instruction information, the charging device charges the power battery based on the third instruction information.

In an implementation, as shown in Fig. 4, the method 100 further includes step 191 to step 193.

In step 191, the BMS sends fourth instruction information to the charging device, the fourth instruction information being used to instruct the charging device to stop charging the power battery.

In step 192, the charging device receives fourth instruction information sent by the BMS, the fourth instruction information being used to instruct the charging device to stop charging the power battery.

In step 193, the charging device stops charging the power battery according to the fourth instruction information.

In this way, after the charging of the power battery is completed, the BMS instructs the charging device to stop charging the power battery by sending fourth instruction information to the charging device.

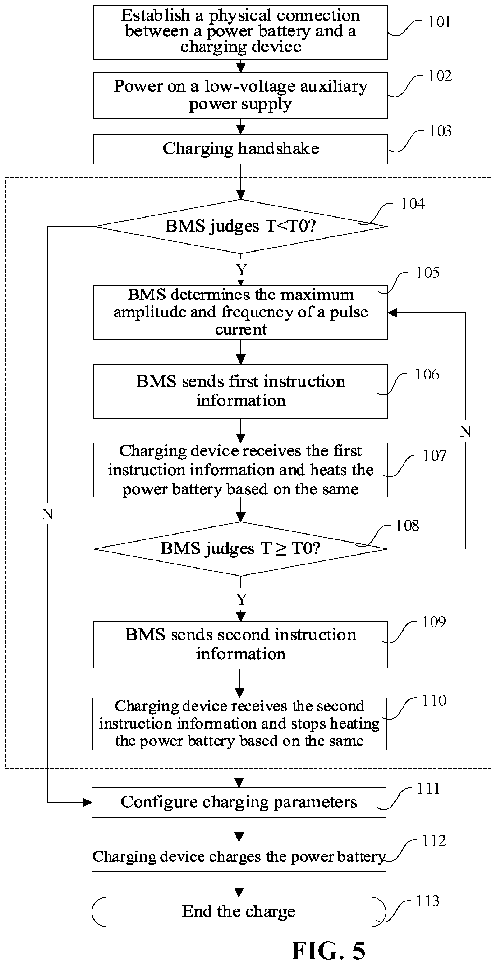

Fig. 5 shows a possible specific implementation of the battery heating method 100 described above. As shown in Fig. 5, a process of heating and charging the power battery may include some or all of the following steps.

In step 101, a physical connection is established between the power battery and the charging device.

In step 102, a low-voltage auxiliary power supply is powered on.

In step 103, handshake is performed between the BMS and the charging device, such as the controller 20, a communication connection is established.

For specific details of steps 101 to 103, and steps 111 to 113, for example, reference may be made to the details of the charging process in GB/T 27930-2015.

Steps 104 to 110 in the dashed box are a possible specific implementation of the battery heating method 100 described above, and steps 104 to 110 are contents that need to be added to the existing standard.

In step 104, the BMS obtains a temperature T of the power battery and compares the temperature T with a temperature threshold T0.

If T<T0, step 105 to step 110 are performed, in which the charging device heats the power battery; otherwise, when T≥T0, step 111 to step 113 are performed directly, in which the charging device charges the power battery.

In step 105, the BMS determines a maximum amplitude and the frequency of the pulse current for heating the power battery.

For example, the BMS may determine a maximum amplitude and/or the frequency of the pulse current matching the power battery in a manner such as table lookup.

In step 106, the BMS sends the first instruction information to the charging device.

For example, the first instruction information may carry information about a maximum amplitude and the frequency of the pulse current.

In step 107, the charging device receives the first instruction information, and heats the power battery based on the first instruction information.

The amplitude and frequency of the pulse current in the heating process of the power battery may be determined based on the information about the maximum amplitude and the frequency of the pulse current carried in the first instruction information.

In step 108, during the heating process, the BMS compares T with temperature threshold T0.

If T<T0, step 105 to step 107 are performed repeatedly, in which the charging device heats the power battery; otherwise, when T ≥ T0, Step 109 and Step 110 are performed.

In step 109, the BMS sends the second instruction information to the charging device.

In step 110, the charging device receives the second instruction information, and stops heating the power battery based on the second instruction information.

Next, after step 110, steps 111 to 113 are performed.

In step 111, the configuration of the charging parameters is performed.

For example, the BMS may send charging parameters such as information about a charging voltage and a charging current to the charging device.

In step 112, the charging device charges the power battery based on the charging parameters.

In step 113, the charging ends.

It can be seen that, in the embodiment of the present application, after a physical connection is established between the power battery and the charging device and the handshake succeeds, the BMS of the power battery judges the current temperature of the power battery, if the temperature is low, the power battery is heated first, after the temperature thereof rises, the power battery is charged, so that damage to the power battery caused by low-temperature charging can be avoided, and security of the power battery can be improved.

The embodiments of the present application does not limit how the charging device charges the power battery. As an example, in an implementation, the charging device may include a bidirectional DC/DC converter. In step 140, heating the power battery according to the first instruction information includes: controlling the bidirectional DC/DC converter to form a circuit for discharging from the power battery to the charging device and a circuit for charging the power battery by the charging device, so as to heat the power battery during the discharging and charging processes.

The bidirectional DC/DC converter includes a plurality of switching transistors, by controlling each switching transistor in the bidirectional DC/DC converter, so that the power battery and the charging device may be alternately charged and discharged so as to heat the power battery during the charging and discharging processes.

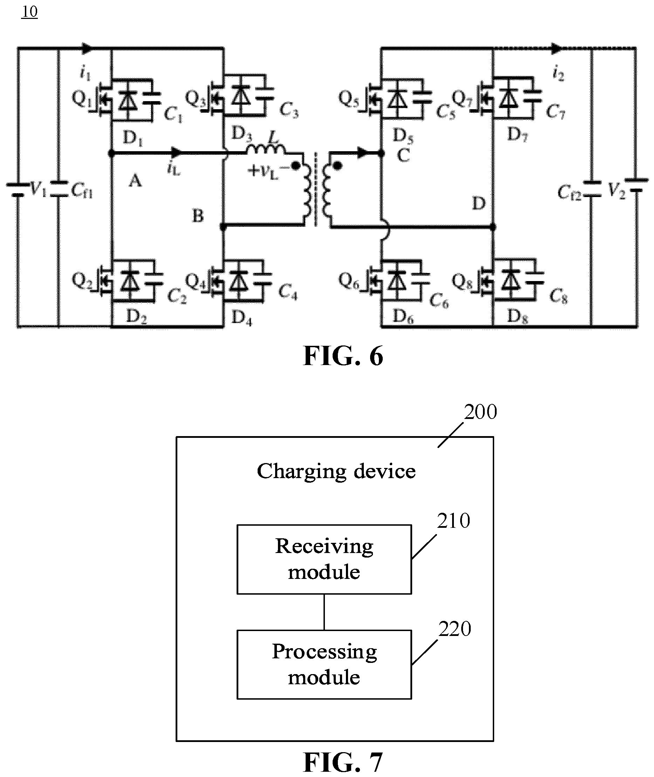

The following takes a DC/DC converter shown in Fig. 6 as an example to describe how the charging device heating the power battery. Fig. 6 takes a DC/DC converter with a dual active bridge (DAB) architecture as an example. The switching transistors are controlled according to a time sequence so as to form a circuit for discharging from the power battery to the charging device and a circuit for charging the power battery by the charging device alternatively, thereby heating the power battery during the discharging and charging processes. In practical applications, a DC/DC converter with an architecture such as LLC, CLLC, CF-DAB, partial-power converter may also be used.

As an example, a bidirectional DC/DC converter 10 is shown in Fig. 6, each bridge arm in the bidirectional DC/DC converter 10 includes two switching transistors connected in series, they are a bridge arm formed by switching transistor Q1 and switching transistor Q2, a bridge arm formed by switching transistor Q3 and switching transistor Q4, a bridge arm formed by switching transistor Q5 and switching transistor Q6, and a bridge arm formed by switching transistor Q7 and switching transistor Q8 respectively.

Without considering the dead time, the upper and lower switching transistors of each bridge arm are in 180° complementary conduction, and the diagonal switching transistors are in simultaneously conduction. It is assumed that the switching period is T, the switching frequency fs=1/T, V₁ and V₂ are input voltage and output voltage respectively, wherein Viside is the side connecting with the AC/DC converter or the energy storage battery, and V₂ side is the side connecting with the power battery. V_{AB} is the voltage between point A and point B in Fig. 6, and V_{CD} is the voltage between point C and point D in Fig. 6. i_{L} is the inductive current, and v_{L} is the inductive voltage. The magnitude of the transmission power of the bidirectional DC/DC converter 10 is controlled by controlling the angle between V_{AB} and V_{CD}, i.e., the phase shift angle, and the ratio of the phase shift angle to π is the phase shift duty cycle D_{ϕ}>0.

When the bidirectional DC/DC converter 10 operates in the forward direction, the driving signal waveforms of switching transistors Q₁ and Q₄, Q₂ and Q₃ respectively ahead of switching transistors Q₅ and Q₈, Q₆ and Q₇, at this time, D_{ϕ}>0; when it operates in the reverse direction, the driving signal waveforms of switching transistors Q₁ and Q₄, Q₂ and Q₃ respectively lag behind switching transistors Q₅ and Q₈, Q₆ and Q₇, at this time, D_{ϕ}<0; The principle of the reverse operation of the bidirectional DC/DC converter 10 is similar to that of the forward operation, in the following, the forward operation is used as an example to describe the charging and discharging process between the bidirectional DC/DC converter 10 and the power battery.

In a switching period, for switch state 1 (before time t0), before time t0, switching transistor Q₂ and switching transistor Q₃, switching transistor Q₆ and switching transistor Q₇ are turned on, the inductive current i_{L} is negative, and current passes through switching transistor Q₂ and switching transistor Q₃, switching transistor Q₆ and switching transistor Q₇, and the power flows from V₁ side to V₂ side.

For switch state 2 (from time t0 to time 11), at time t0, all switching transistors on V₁ side are turned off, and switching transistor Q₆ and the switching transistor Q₇ on V₂ side are turned on. Since the inductive current cannot change suddenly, the inductive current i_{L} is still negative, and the inductive current charges the parasitic capacitors C₂ and C₃, while capacitors C₁ and C₄ are discharged. At time t1, the voltages across capacitors C₂ and C₃ reach V₁, the voltages across capacitors C₁ and C₄ are zero, and the anti-parallel diodes D₁ and D₄ are naturally turned on.

For switch state 3 (from time t1 to time t2), at time t1, switching transistor Q₁ and switching transistor Q₄ are turned on. Since the anti-parallel diodes D₁ and D₄ of switching transistor Q₁ and the switching transistor Q₄ are turned on at time t1, the voltages across switching transistor Q₁ and switching transistor Q₄ are zero when they are turned on, so that zero voltage conduction is achieved. At this time, the inductive current i_{L} is negative, V₁ side and V₂ side absorb power, the energy stored in the inductor is transmitted to V₁ side and V₂ side, and there is a power backflow phenomenon on V₁ side.

For switch state 4 (from time t2 to time t3), starts from time t2, due to the effect of power supply V₁, the inductive current starts to become positive, which flows through switching transistor Q₁ and switching transistor Q₄, switching transistor Q₆ and the switching transistor Q₇, and in switch state 4, V₁ side and V₂ side store energy to the inductor simultaneously, because the power flows from V₂ side to the inductor, there is a power backflow phenomenon on V₂ side.

For switch state 5 (from time t3 to time t4), switching transistor Q₆ and switching transistor Q₇ are turned off, and the current charges the capacitors C₆ and C₇ while the capacitors C₅ and C₈ are discharged. At time t4, the voltages across capacitors C₆ and C₇ reach V₂, the voltages across capacitors C₅ and C₈ are zero, and the anti-parallel diodes D₅ and D₈ are naturally turned on.

For switch state 6 (from time t4 to time t5), at time t4, switching transistor Q₅ and switching transistor Q₈ are turned on. Since the anti-parallel diodes D₅ and D₈ of the switching transistor Q₅ and switching transistor Q₈ are turned on at this time, the voltages across D₅ and D₈ are zero when they are turned on, so that zero voltage conduction is achieved. In switch state 6, the V₁ side outputs power and the V₂ side absorbs power.

After time t5, the bidirectional DC/DC converter 10 operates in another half of the switching period, and the specific process is similar to that described above, and will not be described herein again.

It can be seen that, in the bidirectional DC/DC converter 10, by discharging from the power battery to the inductor and charging the power battery by the inductor, it is possible to heat the power battery during the alternating process of charging and discharging.

In addition, the charging device may further include an AC/DC converter, such as the bidirectional AC/DC converter 30 shown in Fig. 1. The AC/DC converter and the bidirectional DC/DC converter are connected between an alternating current power supply and a power battery.

Alternatively, the charging device may further include an energy storage battery, such as the energy storage battery 60 shown in Fig. 2. The bidirectional DC/DC converter is connected between the energy storage battery and the power battery.

The present application further provides a charging device 200. As shown in Fig. 7, the charging device 200 includes:
a receiving module 210, configured to receive first instruction information sent by a battery management system BMS of a power battery before the charging device 200 charges the power battery, the first instruction information is used to instruct the charging device 200 to heat the power battery; and
a processing module 220, configured to heat the power battery according to the first instruction information.

In an implementation, the first instruction information includes information about the amplitude and/or frequency of a pulse current used to heat the power battery.

In an implementation, the charging device 200 further includes a bidirectional DC/DC converter. The processing module 220 is specifically configured to: control the bidirectional DC/DC converter to form a circuit for discharging from the power battery to the charging device 200 and a circuit for charging the power battery by the charging device 200, so as to heat the power battery during the discharging and charging processes.

In an implementation, the charging device 200 further includes an AC/DC converter, the AC/DC converter and the bidirectional DC/DC converter are connected between an alternating current power supply and the power battery.

In an implementation, the charging device 200 further includes an energy storage battery, and the bidirectional DC/DC converter is connected between the energy storage battery and the power battery.

In an implementation, the receiving module 210 is further configured to: receive second instruction information sent by the BMS, the second instruction information is used to instruct the charging device 200 to stop heating the power battery; and the processing module 220 is further configured to: stop heating the power battery according to the second instruction information.

In an implementation, the receiving module 210 is further configured to: receive third instruction information sent by the BMS, wherein the third instruction information is used to instruct the charging device 200 to charge the power battery, the third instruction information including information about a charging voltage and/or a charging current; and the processing module 220 is further configured to: charge the power battery according to the third instruction information.

In an implementation, the receiving module 210 is further configured to: receive fourth instruction information sent by the BMS, the fourth instruction information is used to instruct the charging device 200 to stop charging the power battery; and the processing module 220 is further configured to: stop charging the power battery according to the fourth instruction information.

It should be understood that for specific details of the charging device 200, reference may be made to the foregoing descriptions of the method 100 for the charging device. For brevity, details are not described herein again.

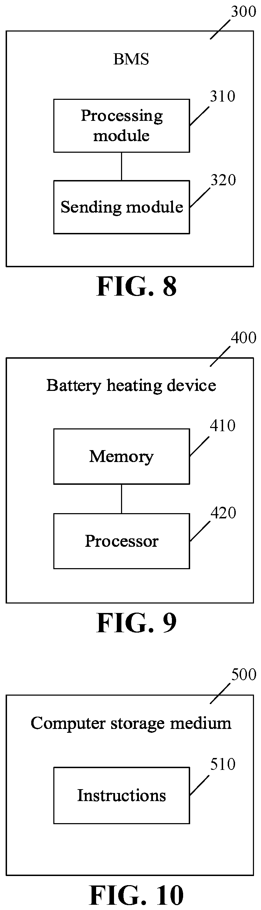

The present application further provides a BMS. As shown in Fig. 8, the BMS 300 includes:
a processing module 310, configured to obtain the temperature of a power battery before a charging device charges the power battery; and
a sending module 320, configured to send first instruction information to the charging device when the temperature of the power battery is less than a temperature threshold, the first instruction information being used to instruct the charging device to heat the power battery.

In an implementation, the first instruction information includes information about the amplitude and/or frequency of a pulse current used to heat the power battery.

In an implementation, before sending the first instruction information to the charging device, the processing module 310 is further configured to: determine, according to a preset corresponding relationship between a plurality of temperatures and a plurality of amplitudes, that the maximum amplitude of the pulse current is the amplitude corresponding to the temperature of the power battery; and/or, determine, according to a preset corresponding relationship between a plurality of temperatures and a plurality of frequencies, that the frequency of the pulse current is the frequency corresponding to the temperature of the power battery.

In an implementation, the sending module 320 is further configured to: send second instruction information to the charging device when the temperature of the power battery is greater than or equal to the temperature threshold, the second instruction information being used to instruct the charging device to stop heating the power battery.

In an implementation, the sending module 320 is further configured to: send third instruction information to the charging device, wherein the third instruction information is used to instruct the charging device to charge the power battery, and the third instruction information includes information about a charging voltage and/or a charging current.

In an implementation, the sending module 320 is further configured to: send fourth instruction information to the charging device, the fourth instruction information being used to instruct the charging device to stop charging the power battery.

It should be understood that, for specific details of the BMS 300, reference may be made to the foregoing descriptions of the method 100 for the BMS. For brevity, details are not described herein again.

Fig. 9 is a schematic block diagram of a battery heating device according to another embodiment of the present application; As shown in Fig. 9, the battery heating device 400 includes a memory 410 and a processor 420. The memory 410 is configured to store instructions, and the processor 420 is configured to read the instructions, and execute, based on the instructions, operations performed by the charging device or the control device of the power battery in the battery heating method 100 in each embodiment of the present application.

Fig. 10 is a schematic block diagram of a computer storage medium according to another embodiment of the present application. As shown in Fig. 10, the computer storage medium 500 includes instructions 510. The instructions 510 are used to enable a computer to execute operations performed by the charging device or the control device of the power battery in the battery heating method 100 in the foregoing embodiments of the present application.

The present application further provides a power device, including a power battery and a charging device in any one of the foregoing embodiments. The charging device is connected with the power battery, used to heat the power battery before charging the power battery. The power device may be, for example, a power vehicle or the like.

Those of ordinary skill in the art may realize that units and algorithm steps of each example described with reference to the examples disclosed herein can be implemented in electronic hardware, or a combination of computer software and electronic hardware. Whether these functions are performed in hardware or software depends on a specific application and a design constraint condition of the technical solution. Those skilled in the art may implement the described functions using different methods for each particular application, but such implementations should not be considered beyond the scope of the present application.

A person skilled in the art may clearly understand that, for convenience and brevity of description, for a specific working process of the systems, devices, and units described above, reference may be made to the corresponding processes in the foregoing method embodiments, and details are not described herein again.

In several embodiments provided in the present application, it should be understood that the disclosed system, device, and method may be implemented in other manners. For example, the apparatus example described above is only illustrative. For example, the division of the units is only a logical function division. In an actual implementation, there may be other division methods. For example, a plurality of units or components may be combined or may be integrated into another system, or some features may be ignored, or not implemented. On the other hand, the shown or discussed mutual coupling or direct coupling or communication connection may be indirect coupling or communication connection through some interfaces, apparatuses, or units, and may be in electrical, mechanical, or in other forms.

The units described as separate components may or may not be physically separated, and components displayed as units may or may not be physical units, that is, may be located in one place, or may be distributed to a plurality of network units. Some or all of the units may be selected according to actual needs to achieve the purpose of the solution in this example.

## Claims

1. A method for heating a battery, wherein the method is performed by a charging device, the method comprising:
receiving, before the charging device charges a power battery, first instruction information from a control device of the power battery, the first instruction information being used to instruct the charging device to heat the power battery; and
heating the power battery according to the first instruction information.

2. The method according to claim 1, wherein the first instruction information comprises information about the amplitude and/or frequency of a pulse current used to heat the power battery.

3. The method according to claim 1 or 2, wherein the charging device comprises a bidirectional DC/DC converter, and the heating the power battery according to the first instruction information comprises:
controlling the bidirectional DC/DC converter to form a circuit for discharging from the power battery to the charging device and a circuit for charging the power battery by the charging device, so as to heat the power battery during the discharging and charging processes.

4. The method according to claim 3, wherein the charging device further comprises an AC/DC converter, and the AC/DC converter and the bidirectional DC/DC converter are connected between an alternating current power supply and the power battery.

5. The method according to claim 3, wherein the charging device further comprises an energy storage battery, and the bidirectional DC/DC converter is connected between the energy storage battery and the power battery.

6. The method according to any one of claims 1 to 5, wherein the method further comprises:
receiving second instruction information from the control device, the second instruction information being used to instruct the charging device to stop heating the power battery; and
stopping heating the power battery according to the second instruction information.

7. The method according to any one of claims 1 to 6, wherein the method further comprises:
receiving third instruction information from the control device, wherein the third instruction information is used to instruct the charging device to charge the power battery, and the third instruction information comprises information about a charging voltage and/or a charging current; and
charging the power battery according to the third instruction information.

8. The method according to claim 7, wherein the method further comprises:
receiving fourth instruction information from the control device, the fourth instruction information being used to instruct the charging device to stop charging the power battery; and
stopping charging the power battery according to the fourth instruction information.

9. A method for heating a battery, wherein the method is performed by a control device of a power battery, the method comprising:
obtaining the temperature of the power battery before a charging device charges the power battery; and
sending first instruction information to the charging device if the temperature of the power battery is less than a temperature threshold, the first instruction information being used to instruct the charging device to heat the power battery.

10. The method according to claim 9, wherein the first instruction information comprises information about the amplitude and/or frequency of a pulse current used to heat the power battery.

11. The method according to claim 10, wherein before the sending first instruction information to the charging device, the method further comprises:
determining, according to a preset corresponding relationship between a plurality of temperatures and a plurality of amplitudes, that the maximum amplitude of the pulse current is the amplitude corresponding to the temperature of the power battery; and/or
determining, according to a preset corresponding relationship between a plurality of temperatures and a plurality of frequencies, that the frequency of the pulse current is the frequency corresponding to the temperature of the power battery.

12. The method according to any one of claims 9 to 11, wherein the method further comprises:
sending second instruction information to the charging device when the temperature of the power battery is greater than or equal to the temperature threshold, the second instruction information being used to instruct the charging device to stop heating the power battery.

13. The method according to any one of claims 9 to 12, wherein the method further comprises:
sending third instruction information to the charging device, wherein the third instruction information is used to instruct the charging device to charge the power battery, and the third instruction information includes information about a charging voltage and/or a charging current.

14. The method according to claim 13, wherein the method further comprises:
sending fourth instruction information to the charging device, the fourth instruction information being used to instruct the charging device to stop charging the power battery.

15. A charging device, comprising:
a receiving module, configured to receive first instruction information from a control device of a power battery before the charging device charges the power battery, the first instruction information being used to instruct the charging device to heat the power battery; and
a processing module, configured to heat the power battery according to the first instruction information.

16. The charging device according to claim 15, wherein the first instruction information comprises information about the amplitude and/or frequency of a pulse current used to heat the power battery.

17. The charging device according to claim 15 or 16, wherein the charging device further comprises a bidirectional DC/DC converter, and the processing module is specifically configured to:
control the bidirectional DC/DC converter to form a circuit for discharging from the power battery to the charging device and a circuit for charging the power battery by the charging device, so as to heat the power battery during the discharging and charging processes.

18. The charging device according to claim 17, wherein the charging device further comprises an AC/DC converter, and the AC/DC converter and the bidirectional DC/DC converter are connected between an alternating current power supply and the power battery.

19. The charging device according to claim 17, wherein the charging device further comprises an energy storage battery, and the bidirectional DC/DC converter is connected between the energy storage battery and the power battery.

20. The charging device according to any one of claims 15 to 19, wherein
the receiving module is further configured to: receive second instruction information from the control device, the second instruction information being used to instruct the charging device to stop heating the power battery; and
the processing module is further configured to: stop heating the power battery according to the second instruction information.

21. The charging device according to any one of claims 15 to 20, wherein
the receiving module is further configured to: receive third instruction information from the control device, wherein the third instruction information is used to instruct the charging device to charge the power battery, and the third instruction information includes information about a charging voltage and/or a charging current; and
the processing module is further configured to: charge the power battery according to the third instruction information.

22. The charging device according to claim 21, wherein
the receiving module is further configured to: receive fourth instruction information from the control device, the fourth instruction information being used to instruct the charging device to stop charging the power battery; and
the processing module is further configured to: stop charging the power battery according to the fourth instruction information.

23. A battery management system BMS, comprising:
a processing module, configured to obtain the temperature of a power battery before the power battery is charged by a charging device; and
a sending module, configured to send first instruction information to the charging device when the temperature of the power battery is less than a temperature threshold, the first instruction information being used to instruct the charging device to heat the power battery.

24. The BMS according to claim 23, wherein the first instruction information comprises information about the amplitude and/or frequency of a pulse current used to heat the power battery.

25. The BMS according to claim 24, wherein before the first instruction information is sent to the charging device, the processing module is further configured to:
determine, according to a preset corresponding relationship between a plurality of temperatures and a plurality of amplitudes, that the maximum amplitude of the pulse current is the amplitude corresponding to the temperature of the power battery; and/or
determine, according to a preset corresponding relationship between a plurality of temperatures and a plurality of frequencies, that the frequency of the pulse current is the frequency corresponding to the temperature of the power battery.

26. The BMS according to any one of claims 23 to 25, wherein the sending module is further configured to:
send second instruction information to the charging device when the temperature of the power battery is greater than or equal to the temperature threshold, the second instruction information being used to instruct the charging device to stop heating the power battery.

27. The BMS according to any one of claims 23 to 26, wherein the sending module is further configured to:
send third instruction information to the charging device, wherein the third instruction information is used to instruct the charging device to charge the power battery, and the third instruction information includes information about a charging voltage and/or a charging current.

28. The BMS according to claim 27, wherein the sending module is further configured to:
send fourth instruction information to the charging device, the fourth instruction information being used to instruct the charging device to stop charging the power battery.

29. A battery heating device, comprising a memory and a processor, wherein the memory is configured to store instructions, and the processor is configured to read the instructions, and execute the battery heating method according to any one of claims 1 to 14 based on the instructions.

30. A computer storage medium, comprising instructions for performing the battery heating method according to any one of claims 1 to 14.
